Europäisches Patentamt

European Patent Office

Office européen des brevets

(19)

(11) Veröffentlichungsnummer : **0 240 897**
B1

(12) **EUROPÄISCHE PATENTSCHRIFT**

(45) Veröffentlichungstag der Patentschrift :
13.12.89

(21) Anmeldenummer : 87104712.2

(22) Anmeldetag : 31.03.87

(51) Int. Cl.⁴ : **B 60 S   1/38**, B 29 C  47/04

(54) Wischblatt für Scheibenwischer mit eingebauter Aussteifungslamelle.

(30) Priorität : 09.04.86 FR 8605051

(43) Veröffentlichungstag der Anmeldung :
14.10.87 Patentblatt 87/42

(45) Bekanntmachung des Hinweises auf die Patenterteilung : 13.12.89 Patentblatt 89/50

(84) Benannte Vertragsstaaten :
DE ES FR GB IT

(56) Entgegenhaltungen :
DE--A-- 2 504 453
DE--A-- 3 440 677
FR--A-- 1 306 952
FR--A-- 2 260 473
FR--A-- 2 443 328

(73) Patentinhaber : PAUL JOURNEE S.A.
39, Avenue Marceau
F-92400 Courbevoie (FR)

(72) Erfinder : Journee, Maurice
Le Bois Hédouin
F-60240 Chaumont en Vexin (FR)
Erfinder : Romanek, Christian
57, rue de Paris
F-60430 Noailles (FR)

(74) Vertreter : Patentanwaltsbüro Cohausz & Florack
Postfach 14 01 20 Schumannstrasse 97
D-4000 Düsseldorf 1 (DE)

EP 0 240 897 B1

## Beschreibung

Die Erfindung bezieht sich auf ein Verfahren zum Herstellen eines extrudierten Wischblattes für Scheibenwischer mit eingebauter Aussteifungslamelle aus starrem Material und ein durch dieses Verfahren hergestelltes Wischblatt.

Scheibenwischer umfassen einen nutzbaren Teil, das Wischblatt, im allgemeinen aus Gummi, und einen Träger. Wegen der hohen Elastizität des Wischblatts ist aus der FR-A 2 443 328 ein Verfahren bekannt, es durch Einbau einer Versteifungslamelle aus Metall oder Kunststoff auszusteifen. Die Wischblattfassung, die verformbar ist, stützt sich auf diese Lamelle ab und wird hochgedrückt. Herstellung und Montage des Wischblatts sind relativ komplizierte und aufwendige Vorgänge ; sie erfordern am Wischblatt und an der Lamelle sichere Halterungsmittel, um ihre Trennung während des Gebrauchs zu verhindern. Diese Komplikation wird noch verstärkt durch die Verwendung stranggepreßter Wischblätter, die es im Gegensatz zu den früheren geformten Wischblättern nicht ermöglichen, derartige Halterungsmittel schon beim Strangpressen einzuarbeiten. Zudem hat das Wischblatt eine große Höhe wegen der Anwesenheit eines Wulstes, der im allgemeinen die Lamelle überragt. Aufgabe der Erfindung ist es, diesen Nachteilen mit einem neuartigen Wischblatt für Scheibenwischer zu beheben, das gleichzeitg mit seinem Aussteifungsteil oder der Lamelle hergestellt wird. Das erfindungsgemäße Wischblatt ist dadurch gekennzeichnet, daß ein Wischgummi zusammen mit dem starren Material der Lamelle gleichzeitig extrudiert wird.

Durch ein Extrudieren des Wischgummis zusammen mit dem starren Lamellenmaterial wird eine sehr feste Verbindung zwischen den beiden Teilen ebenso wie eine minimale Höhe gewährleistet und es darüber hinaus ermöglicht, die Wischblätter mit ihren Lamellen von einem sehr langen Preßstrang auf die gewünschten Längen zu schneiden.

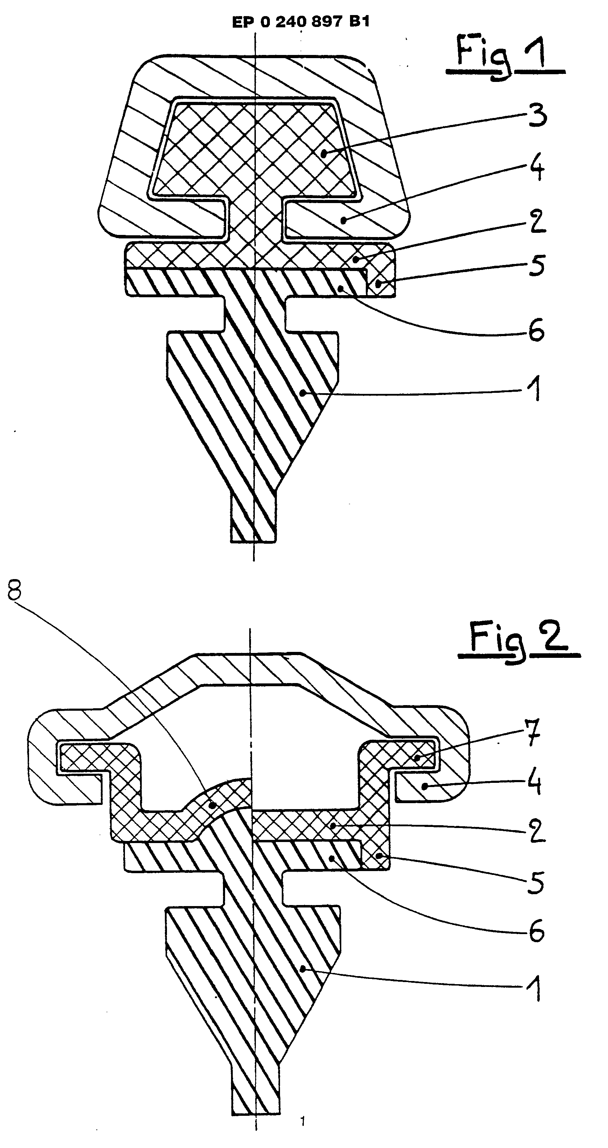

Die Erfindung wird gut verständlich beim Lesen der folgenden Beschreibung unter Bezugnahme auf die beigeheftete Zeichnung, in der die Figuren 1 und 2 jeweils zwei halbe Querschnitte eines Wischblatts nach Varianten der Erfindung darstellen, das an einem brückenförmigen Träger befestigt ist.

Das Wischblatt wird gebildet durch einen Wischgummi 1, der zur gleichen Zeit extrudiert wird wie eine Lamelle 2 aus starrem, aber elastisch verformbarem Kunststoff.

In den Beispielen der Figur 1 baut sich über der Lamelle 2 ein Längswulst 3 auf, an dem sich die Pratzen 4 des brückenförmigen Wischblattträgers einhaken. Am rechten Teil der Figur 1 umfaßt die Lamelle 2 einen seitlichen, nach außen umgebogenen Rand 5, der die Fußfläche 6 des Wischgummis 1 einschließt und die Berührungsfläche zwischen den beiden Bestandteilen des Wischblatts vergrößert.

In den Beispielen der Figur 2 umfaßt die Lamelle 2 erhöhte Flügel 7, an denen sich die Pratzen 4 der brückenförmigen Träger festhalten. In der linken Ausführungsform umfaßt die Lamelle 2 zudem eine in Längsrichtung verlaufende mittlere Gewölberippe 8 zur Versteifung, während im rechten Teil die Flügel 7 nach unten durch seitliche Randleisten 5 wie in der rechten Version der Figur 1 verlängert sind.

## Patentansprüche

1. Verfahren zum Herstellen eines extrudierten Wischblattes (1, 2) für Scheibenwischer mit eingebauter Aussteifungslamelle (2) aus starrem Material, dadurch gekennzeichnet, daß ein Wischgummi (1) zusammen mit dem starren Material der Lamelle (2) gleichzeitig extrudiert wird.

2. Durch das Verfahren nach Anspruch 1 hergestelltes Wischblatt, dadurch gekennzeichnet, daß die Lamelle (2) an ihrer Oberseite einen Längswulst (3) zum Zusammenwirken mit den Pratzen (4) der brückenförmigen Wischblattträger umfaßt.

3. Durch das Verfahren nach Anspruch 1 hergestelltes Wischblatt, dadurch gekennzeichnet, daß die Lamelle (2) hochstehende Flügel (7) zum Zusammenwirken mit den Pratzen (4) der brückenförmigen Wischblattträger umfaßt.

4. Wischblatt nach einem der vorangehenden Ansprüche, dadurch gekennzeichnet, daß die Lamelle (2) seitliche Randleisten (5) umfaßt, die die Fußfläche (6) des Wischblatts einspannen.

5. Durch das Verfahren nach Anspruch 1 hergestelltes Wischblatt, dadurch gekennzeichnet, daß die Lamelle (2) eine mittlere, in Längsrichtung verlaufende Gewölberippe (8) umfaßt.

## Claims

1. A process for manufacturing an extruded windscreen wiper blade (1, 2) with a built-in stiffening element (2) made of rigid material, characterized in that, simultaneously, a rubber wiper (1) is extruded together with the rigid material of the stiffening element (2).

2. A wiper blade produced by the process as claimed in Claim 1, characterized in that the element (2) comprises on its upper surface a longitudinal beading (3) for cooperation with claw-like supports (4) of a bridge-shaped wiper blade carrier.

3. A wiper blade produced by the process as claimed in Claim 1, characterized in that the element (2) comprises raised wings (7) for cooperation with claw-like supports (4) of a bridge-shaped wiper blade carrier.

4. A wiper blade according to any one of the preceding claims, characterized in that the element (2) comprises edge strips (5) at the sides thereof which clamp the bottom portion (6) of the wiper blade.

5. A wiper blade produced by the process as claimed in Claim 1, characterized in that the element (2) comprises a central arched rib (8) extending longitudinally.


**Revendications**

1. Procédé de fabrication d'une raclette extrudée (1, 2) d'essuie-glace incorporant une lamelle de raidissement (2) en matière rigide, caractérisé en ce que un caoutchouc d'essuyage (1) est extrudé conjointement en même temps avec la matière rigide de la lamelle (2).

2. Raclette fabriquée selon le procédé de la revendication 1, caractérisée en ce que la lamelle (2) comporte un bourrelet longitudinal (3) sur sa face supérieure pour coopérer avec les pattes (4) de la structure porteuse en forme de pont de la raclette.

3. Raclette fabriquée selon le procédé de la revendication 1, caractérisée en ce que la lamelle (2) comporte des ailes surélevées (7) pour coopérer avec les pattes (4) de la structure porteuse en forme de pont de la raclette.

4. Raclette selon l'une des revendications précédentes, caractérisée en ce que la lamelle (2) comporte des rebords latéraux (5) enserrant l'embase (6) de la raclette.

5. Raclette fabriquée selon le procédé de la revendication 1, caractérisée en ce que la lamelle (2) comporte une nervure centrale longitudinale (8).

EP 0 240 897 B1

Fig 1

Fig 2